Europäisches Patentamt

European Patent Office

Office européen des brevets

(11) Numéro de publication: **0 097 116**
**A1**

(12) # DEMANDE DE BREVET EUROPEEN

(21) Numéro de dépôt: **83810238.2**

(22) Date de dépôt: **06.06.83**

(51) Int. Cl.³: **C 09 D 5/10,** C 09 C 1/62, C 09 C 3/06

(30) Priorité: **10.06.82 CH 3581/82**

(71) Demandeur: **BATTELLE DEVELOPMENT CORPORATION, 505 King Avenue, Columbus Ohio 43201 (US)**

(43) Date de publication de la demande: **28.12.83 Bulletin 83/52**

(72) Inventeur: **Kornmann, Michel, 31, chemin des Palettes, CH-1212 Grand-Lancy (CH)**
Inventeur: **Talmor, Yehuda, 2, rue Maurice Barraud, CH-1206 Geneve (CH)**

(84) Etats contractants désignés: **AT BE CH DE FR GB IT LI LU NL SE**

(74) Mandataire: **Dousse, Blasco et al, 7, route de Drize, CH-1227 Carouge/Genève (CH)**

(54) **Procédé de fabrication d'une peinture anti-corrosion et peinture obtenue selon ce procédé.**

(57) Ce procédé de fabrication consiste à former une couche de passivation sur des pigments de manganèse et à les mélanger ensuite à une résine pour former une peinture. Cette peinture est électriquement conductrice, la couche de passivation étant à base de chromate, de phosphate de Mn/Fe ou de phosphate de Zn. Ces pigments ont de préférence une pureté égale ou supérieure à 99,9%.

EP 0 097 116 A1

0097116

PROCEDE DE FABRICATION D'UNE PEINTURE ANTI-CORROSION

ET PEINTURE OBTENUE SELON CE PROCEDE

La présente invention se rapporte à un procédé de fabrication d'une peinture anti-corrosion agissant par protection cathodique et à une peinture obtenue selon ce procédé.

Il existe déjà dans le commerce, des tôles d'acier protégées contre la corrosion par une couche primaire à base de zinc, pour fournir une protection cathodique du substrat métallique par sa propre dissolution anodique, comme ceci se produit dans les tôles zinguées. De telles tôles sont notamment utilisées dans l'industrie automobile, en particulier parce qu'une telle couche primaire est conductrice et permet de souder les tôles par résistance et parce qu'elle peut recevoir une ou plusieurs couches de peinture de finition.

La présence d'une couche primaire à base de zinc présente tout de même un grave inconvénient, puisque le zinc n'entre pas dans la composition de l'acier. De ce fait, les déchets d'acier produits, revêtus d'une telle couche primaire perdent la plus grande partie de leur valeur lorsqu'il s'agit de les refondre. Or, dans l'industrie automobile par exemple, les déchets représentent quelques 30% de la tôle d'acier consommée, de sorte que la perte est considérable. Un autre inconvénient constaté avec les tôles zinguées est dû aux soudures par points auxquelles ces tôles sont soumises. On constate en effet une usure accrue des électrodes de soudage et la production de fumées dangereuses.

Il a déjà été proposé d'utiliser des pigments de manganèse métallique dans une peinture anti-corrosion comme ceci ressort de l'article "Metallic manganese as an anticorrosive pigment for paint" de G.L.E. Wild dans Paint Technology Vol. 30 No. 8, Août 1966. On a pu démontrer en particulier qu'une telle peinture offre une protection cathodique de la tôle au même titre qu'une peinture au zinc et est également électriquement conductrice ce qui permet le soudage par résistance. La durée d'une telle protection dépend évidemment de la durée de vie des pigments de Mn. Or ces pigments sont relativement

- 2 -                                                 0097116

sensibles vis-à-vis d'un environnement agressif, de sorte que leur durée de vie n'est pas seulement une fonction de leur dissolution anodique fournissant une protection de la tôle, mais aussi de la dégradation de ces pigments par l'environnement lui-même, qui est de loin supérieure à celle des pigments de zinc.

On sait que le manganèse entre normalement dans la composition de l'acier, de sorte que, contrairement aux tôles revêtues d'une couche primaire à base de zinc, les déchets de tôles revêtus d'une couche primaire à base de manganèse pourraient être recyclés sans inconvénient dans un processus de récupération, pour produire de l'acier de bonne qualité, ce qui valoriserait considérablement ces déchets. Malgré les inconvénients de la peinture au zinc, il n'existe pas sur le marché, de tôle revêtue d'une couche primaire au manganèse en raison de la sensibilité de ces pigments eux-mêmes vis-à-vis de l'environnement.

On a déjà proposé dans les brevets US 3,671,331 et 3,687,738 des compositions de revêtement sans résine destinées à protéger un substrat métallique contre la corrosion et comprenant avant durcissement un mélange en milieu liquide d'acide chromique, d'un agent réducteur et 200 - 1000 g de manganèse par litre du liquide formant ce milieu. L'acide chromique présent dans le mélange provoque vraisemblablement avant le durcissement, la chromatation des particules de manganèse. Il faut toutefois remarquer qu'une telle composition exempte de résine ne constitue pas une peinture mais une couche primaire et que dans le cas d'une peinture dont le liant est une résine, il n'est pas possible d'obtenir la formation d'un chromate ou phosphate sur les pigments de manganèse en formant un tel mélange.

Le but de la présente invention est de remédier aux inconvénients des peintures anti-corrosion à base de pigments de manganèse.

A cet effet, cette invention a pour objet un procédé de fabrication d'une peinture anti-corrosion selon la revendication 1.

La préparation de pigments de manganèse destinés à être mélangés à une résine pour former la peinture anti-corrosion consiste tout d'abord à choisir du manganèse de grande pureté, en principe égale ou supérieure à 99,9%, dans la mesure où plus le manganèse est pur, moins il est susceptible d'être dégradé par l'environnement. Ce manganèse se présente sous la forme de paillettes et la première opération consiste à le réduire en poudre dans un broyeur. La granulométrie moyenne de la poudre ainsi obtenue varie entre 1,8 et 2,4 µ.

La couche de passivation formée sur ces grains de poudre peut être obtenue dans différents bains de phosphatation suivis de bains de rinçage au chromate et d'un séchage, ou uniquement avec des bains de chromate.

Les couches de passivation ainsi obtenues ne sont en principe pas conductrices d'électricité. Il importe alors de choisir la durée du traitement de sorte que l'épaisseur de la couche formée autour de la particule de poudre soit suffisante pour assurer sa passivation tout en restant relativement mince pour permettre une conduction électrique par effet "tunnel".

Deux types de bains de phosphatation ont été utilisés, un bain I de phosphate de Zn + $H_2O$ (Hydrolite 21.02 de Angewandte Chemie AG), un bain II de phosphate de Mn/Fe + $H_2O$ (Hydrolite 26.51 du même fournisseur).

Le bain de rinçage au chromate était formé soit d'une solution aqueuse dans le cas du bain III soit d'une solution non aqueuse d'iso-propylène dans le cas du bain IV. Après le séchage les poudres ont été soumises à un test de conductibilité électrique qui s'est révélé être positif dans la grande majorité des cas. Ensuite ces poudres ont été mélangées dans une résine époxy à deux composants, fournie par Jallut, type Super Jaltonit Incolor avec 95% en poids de pigments.

Avant d'appliquer les peintures obtenues avec ces pigments, sur des tôles d'acier, celles-ci ont subit le pré-traitement suivant:

- dégraissage dans un bain de tetrachloro-éthylène à la température ambiante,

- nettoyage abrasif pour enlever les couches d'oxydes,

- exposition pendant 10 minutes aux vapeurs de chloro-éthylène,

- phosphatation dans un bain standard de phosphate de Zn (Hydrolite 21.02) fourni par Angewandte Chemie AG.

La couche obtenue a une masse d'environ $3g/m^2$ correspondant à une épaisseur de l'ordre de 1 µ.

Le rinçage a été effectué dans un bain de chromate standard contenant environ 60% d'acide chromique. Le bain utilisé est vendu sous la dénomination Ampassive par la maison Amstutz Product AG.

0097116

Les différentes peintures testées ont été appliquées sur les tôles ainsi préparées conformément à la norme ASTM D 823-53. Immédiatement après l'application de cette peinture aux pigments de Mn, une solution diluée de la même résine sans pigment a été déposée à la surface de manière à obtenir des échantillons semblables aux conditions réelles des produits peints. La résine a ensuite été polymérisée durant environ 2 heures dans un four à 180°C. Selon ce processus il a été possible d'obtenir une couche primaire d'environ 12 $\mu$ d'épaisseur et une couche finale dont l'épaisseur varie entre 30 et 40 $\mu$. Nous allons donner ci-après différents exemples de passivation de poudre de manganèse après quoi on examinera les résultats obtenus par les échantillons de tôle revêtus de peintures à base de ces poudres.

Exemple 1

Poudre de Mn à 99%, bain IV durée 25'


Exemple 2

Poudre de Mn à 99%, bain III durée 3'30"


Exemple 3

Poudre de Mn à 99%, bain I à 90°C durée 5', bain III durée 2'


Exemple 4

Poudre de Mn à 99%, bain II à 70°C durée 5', bain III durée 2'


Exemple 5

Poudre de Mn à 99%, bain II à température ambiante durée 1 heure, bain IV durée 15'


Exemple 6

Poudre de Mn à 99,9%, bain II à température ambiante durée 1'30", bain III durée 1'40"


Exemple 7

Poudre de Mn 99,9%, bain I à température ambiante durée 1'30", bain III durée 2'20".

Ces échantillons ont ensuite été testés dans une chambre de brouillard salin obtenu avec une solution aqueuse à 5% de NaCl à 35°C. A titre de comparaison, un échantillon revêtu d'une peinture aux pigments de Zn a été soumis au même traitement. Cet échantillon a été recouvert de résine époxy non pigmentée pour simuler les mêmes conditions que les échantillons recouverts d'une couche primaire à base de Mn. La surface peinte de tous les échantillons a été rayée à la profondeur du substrat métallique pour subir ce test de corrosion.

Après 300 heures de pulvérisation de la solution salée, on constate une corrosion de tous les échantillons à l'endroit des raies y compris l'échantillon revêtu de peinture au Zn.

En ce qui concerne l'échantillon revêtu de peinture au zinc, de grandes zones en dehors des raies sont fortement piquées. Cette dégradation est constatée à des degrés très réduits sur certains des échantillons revêtus de peinture aux pigments de Mn passivés.

Le meilleur comportement a été constaté sur les échantillons correspondant aux pigments de Mn des Exemples 1, 3, 4, les autres échantillons ont donné des résultats satisfaisants.

Ces tests comparatifs montrent que la résistance à la corrosion est nettement améliorée dans le cas de la peinture objet de l'invention par rapport à une peinture dans laquelle les pigments de Mn passivés ont été remplacés par des pigments de Zn, cette résistance devient comparable à celle des peintures "primaires" du commerce.

REVENDICATIONS

1. Procédé de fabrication d'une peinture anti-corrosion agissant par protection cathodique dont le liant est constitué par une résine, caractérisé par le fait que l'on forme une couche de passivation à la surface de pigments de manganèse et que l'on incorpore ensuite ces pigments dans ladite résine.

2. Peinture obtenue selon la revendication 1, caractérisée par le fait qu'elle est électriquement conductrice.

3. Peinture selon la revendication 2, caractérisée par le fait que la couche de passivation est à base de chromate.

4. Peinture selon la revendication 2, caractérisée par le fait que la couche de passivation est à base de phosphate de Mn/Fe.

5. Peinture selon la revendication 2, caractérisée pas le fait que la couche de passivation est à base de phosphate de Zn.

6. Peinture selon l'une des revendications 2 à 5, caractérisée par le fait que les pigments de manganèse sont en manganèse d'une pureté au moins égale à 99,9%.

## Office européen des brevets

# RAPPORT DE RECHERCHE EUROPEENNE

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| D,Y | US-A-3 671 331 (I. MALKIN et al.) <br> * Revendications 1,2,7 * | 1-3,6 | C 09 D 5/10 <br> C 09 C 1/62 <br> C 09 C 3/06 |
| D,Y | US-A-3 687 738 (I. MALKIN) <br><br> * Revendications 1,2 * | 1,2,3, 6 | |
| A | DE-A-2 101 577 (H. HENNING) <br> * Revendication 1 * | 1 | |
| A | FR-A-2 153 294 (HAMMOND LEAD) <br> * Revendication 1 * | 1 | |

DOMAINES TECHNIQUES RECHERCHES (Int. Cl. 3)

C 09 D 5/10
C 09 D 5/08
C 09 C 1/62
C 09 C 3/06

Le présent rapport de recherche a été établi pour toutes les revendications

| Lieu de la recherche <br> LA HAYE | Date d'achèvement de la recherche <br> 29-08-1983 | Examinateur <br> DE ROECK R.G. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03.82